# EUROPEAN PATENT SPECIFICATION

(11) **EP 1 354 731 B1**
(45) Date of publication and mention of the grant of the patent: **16.04.2008**
(21) Application number: 02445048.8
(22) Date of filing: 17.04.2002
(51) Int. Cl.: B60G 11/23, B60G 15/06, B60G 17/02

(54) **Suspension arrangement**
Aufhängungsanordnung
Agencement de suspension

(43) Date of publication of application: 22.10.2003
(73) Proprietor: Ford Global Technologies, Inc., Dearborn, MI 48126-2490 (US)
(72) Inventor: Zetterström, Sigvard, 471 71 Hakenäset (SE)
(74) Representative: Ekström, Nils

(56) References cited:
- EP-A- 0 039 499
- EP-A- 0 292 392
- DE-A- 3 048 532
- DE-A- 19 846 275
- GB-A- 1 487 066
- US-A- 2 206 901
- US-A- 2 590 711
- US-A- 5 797 469
- US-A1- 2001 030 400
- PATENT ABSTRACTS OF JAPAN vol. 017, no. 555 (M-1492), 6 October 1993 (1993-10-06) & JP 05 155225 A (TOYOTA MOTOR CORP), 22 June 1993 (1993-06-22)
- PATENT ABSTRACTS OF JAPAN vol. 015, no. 437 (M-1176), 7 November 1991 (1991-11-07) & JP 03 182832 A (MAZDA MOTOR CORP), 8 August 1991 (1991-08-08)

## Description

### TECHNICAL FIELD

The current invention relates to a method for controlling a vehicular wheel suspension arrangement and an arrangement for carrying out said method. The invention is in particular intended for use as an integrated wheel suspension unit for the respective wheel of an automotive vehicle.

### BACKGROUND ART

In association with modern vehicles, e.g. passenger cars, various types of suspension systems are used for the vehicle wheels and wheel axles. Such wheel suspensions are, in a known manner, arranged for allowing attachment and resilient suspension of the vehicle wheels, in order to provide good comfort for the vehicle passengers and enhancing both the road holding properties and the service life of the vehicle.

A multitude of different types of wheel suspension are previously known, and comprised in systems with e.g. rigid or split wheel axles, which may, according to requirement, be supplemented by spring members, shock absorbers and other components. Besides that, force-absorbing link arms connecting the vehicle wheels to its body, and anti-roll bars for reduction of excessive rolling motions of the vehicle, are often utilised. Conventional suspension arrangements, including McPherson struts and similar dampers, tend to take up a relatively large space and are not always suitable for active control of the suspension properties. Other types of suspensions use hydraulic dampers, which are easier to control but take up at least the same amount of space and are sensitive to leakage of gas or hydraulic fluid.

An example of a compact vehicle suspension unit is shown in WO 00/38939. According to this document, a link arm connected between the respective wheel and the vehicle body is provided with a torsion spring unit for controlling a level adjustment of the wheel and for limited types of active control, such as an anti-roll function of the vehicle. A controllable axial motor in the form of a hydraulic cylinder effects adjustment of the torsion spring unit. In this way the vehicle does not need a conventional, mechanical anti-roll bar.

A problem with this solution is that the torsion spring unit can only be adjusted for various types of static and dynamic loading, such as level adjustment and anti-roll control, involving relatively slow and/or predictable behaviour of the vehicle. It does not allow for immediate adjustment of the torsion spring unit in order to dampen oscillations in each individual wheel suspension, and is even less suitable for simultaneous anti-roll control and oscillation dampening.

A further problem with the above solution is that it can not be adapted to control the resonance frequency of the vehicle body. This frequency is related to a vertical movement of the entire vehicle body, which can occur for certain combinations of vehicle speed and a slightly wave-shaped road surface. Apart from passenger discomfort, this vertical movement may cause damage to the suspension, particularly if a part of the suspension reaches its maximum lower end position.

### DISCLOSURE OF INVENTION

The object of the present invention is to provide an improved vehicular wheel suspension arrangement, which in particular may be utilised as an integrated wheel suspension unit with functions primarily for steering, and preferably also for propulsion and braking, of each individual vehicle wheel. Through the invention, a number of advantages are achieved compared to conventional wheel suspension systems. Primarily it should be noted that the invention constitutes a highly integrated wheel suspension arrangement. This is achieved by means of a method and an arrangement, the characteristics of which are disclosed in the accompanying claims 1 and 7 and their respective dependent claims.

The invention relates to an arrangement according to claim 7 for dampening control in a vehicle suspension, wherein a suspension arrangement for each wheel includes at least two linkages connecting a wheel to a chassis, and where a torsion spring unit is part of one of said linkages. The torsion spring unit comprises an adjustable torsion spring and a rotation damper interconnected by an attachment section, wherein the rotation damper and the torsion spring are connected to the chassis and the attachment section is connected to the linkage.

According to a preferred embodiment of the invention, one of at least a pair of link arms are connected between the respective wheel and the vehicle body, said one link arm being provided with a torsion spring unit for controlling oscillations of the vehicle body and each respective wheel, as well as a level adjustment of the wheel and an anti-roll or an anti-dive function of the vehicle. In this way an advantage is achieved, as the vehicle does not require the provision of a conventional shock absorber or mechanical anti-roll bar.

Each individual torsion spring is arranged to take up its part of the vehicle weight, entirely or in part, to adjust the level of the vehicle, to dampen oscillations in the suspension, and to control the resonance frequency of the vehicle body. Each rotation damper is arranged to optimise the dampening of the vehicle suspension for the anti-roll and anti-dive functions.

The torsion spring unit has an adjustable spring rate and the spring rate is instantaneously adjustable to dampen low frequency oscillations in each individual suspension. The spring rate can be adjusted relative to a pre-stressed position of the torsion spring unit. This is achieved by means of a motor unit integral with the torsion spring unit, which motor adjusts the spring rate in response to a sensed movement of the associated wheel and the suspension linkages. In a preferred embodiment, the torsion spring unit dampens low frequency oscillations. This feature may be used for controlling the resonance frequency of the vehicle body, that is a low frequency vertical movement of the body caused by an uneven or wave-shaped road surface.

The attachment section interconnecting the rotation damper and the torsion spring is preferably a gearing unit, such as a planetary gear, where the outer ring of said unit can serve as an attachment point for a linkage arm. This linkage arm may be connected directly to a wheel hub, or be connected via a further linkage arm.

In order to achieve instantaneous adjustment of the torsion spring, it is provided with an electric motor for adjusting the spring rate. This instantaneous adjustment of the spring rate is primarily intended to dampen vertical oscillating movement of the respective wheel relative to the vehicle body and/or movement of the vehicle body relative to the wheels. The first is a relatively high frequency oscillation caused by an uneven road surface and can be counteracted directly by the suspension. The latter is a relatively low frequency oscillation and is influenced by a combination of factors, such as the natural, or resonance frequency of the vehicle body, the spring rate of the suspension, vehicle speed and a general wave shape of the road surface. It should be noted that the two types of oscillation may occur both totally independent of each other and in combination, requiring different control strategies from the dampening spring torsion unit. The resilient parts of the torsion spring are preferable made from rubber or a similar suitable material. The properties of the torsion spring can be chosen by varying the type of material, the cross-section of each element and the number of elements making up the torsion spring.

According to a preferred embodiment, the torsion spring is built up of a number of annular elements. In this way an electric motor can be placed inside an annular torsion spring. This placement of the motor makes it relatively thin and slim, giving it a low moment of inertia and fast acceleration and deceleration properties. One end of the torsion spring is attached and fixed to the chassis of the vehicle, while the other end is acted on by the electric motor. The said attachment section also is mounted on the latter end By instantaneous control of the motor the torsion spring can be used both for applying a pre-load to the associated linkage, and for dampening oscillating movements transmitted from the associated wheel by said linkage.

Depending on the elements making up the torsion spring, it is also possible to place the electric motor at an outer end of the torsion spring. This may be the case when a more powerful motor is required, when the dimensions of such a motor exceeds the available space inside the torsion spring unit.

The ratio of the angle twist of the torsion spring relative to the rotation of the electric motor for achieving a particular angle of twist can be modified by introducing a gear unit between said torsion spring and said motor. This gear unit is preferably a planetary gear placed between the rotation damper and the torsion spring. For a planetary gear, the attachment section would be mounted on the outer ring of said gear.

The rotation damper is preferably attached to the vehicle chassis at one end and to the torsion spring at the other. If a gear unit is used, then the rotation damper and the torsion spring would be mounted on opposite sides of the gear unit. The rotation damper is preferably a vane rotation damper. Such vane dampers may be of the electro-rheological or the magneto-rheological type, depending on the available power supply and the required output.

The described torsion spring unit is arranged to dampen relatively low frequency oscillations to control the resonance frequency of the vehicle body and/or to dampen relatively high frequency oscillations for each respective wheel. The term "low frequency" in this context includes frequencies of up to 2-3 Hz. while the term "high frequency" applies to frequencies of up to 15 Hz. Controlling the oscillations of the vehicle body and/or the respective wheel at or near their respective resonance frequencies will result in improved comfort and road handling properties.

The linkage attached to the torsion spring unit is an upper linkage arm, although other arrangements are possible within the scope of the invention. The suspension arrangement further comprises leaf springs which can be indirectly pre-loaded by the torsion spring unit. According to a preferred embodiment, the static weight of the vehicle is taken up by the leaf spring, instead of each of the torsion spring units. This enables the use of smaller torsion spring units and/or units allowing a faster response for the dampening control. Each torsion spring unit can then be pre-loaded for controlling the level, or ride height, of the vehicle or a part thereof, depending on the loading of the vehicle. Pre-loading of the torsion spring unit can also be used to control the suspension characteristics or to alter the ride height in response to driver controlled settings, e.g. "sport" or "off-road".

Further advantageous embodiments of the invention are characterised in the subsequent dependent claims.

### BRIEF DESCRIPTION OF DRAWINGS

In the following text, the invention will be described in detail with reference to the attached drawings. These drawings are used for illustration only and do not in any way limit the scope of the invention. In the drawings:
Figure 1 shows a front view of a suspension arrangement including a torsion spring unit according to the invention;
Figure 2 shows a front view of an alternative suspension arrangement including a torsion spring unit according to the invention;
Figure 3 shows a front view of a further alternative suspension arrangement including a torsion spring unit according to the invention;
Figure 4 shows a plan view of a torsion spring unit according to the invention;
Figure 5 shows a cross-section in the axial direction through the torsion spring unit of Figure 4;
Figure 6 shows a cross-section through a gearing unit of the torsion spring unit of Figure 5;
Figure 7 shows a cross-section through a rotation damper of the torsion spring unit of Figure 5;
Figure 8 shows an expansion and refill valve for the rotation damper o f the torsion spring unit of Figure 5;

### MODES FOR CARRYING OUT THE INVENTION

Although the following text describes single torsion spring units, they are to be used as a set of identical units incorporated in their respective wheel suspension arrangement of a vehicle having three or more wheels.

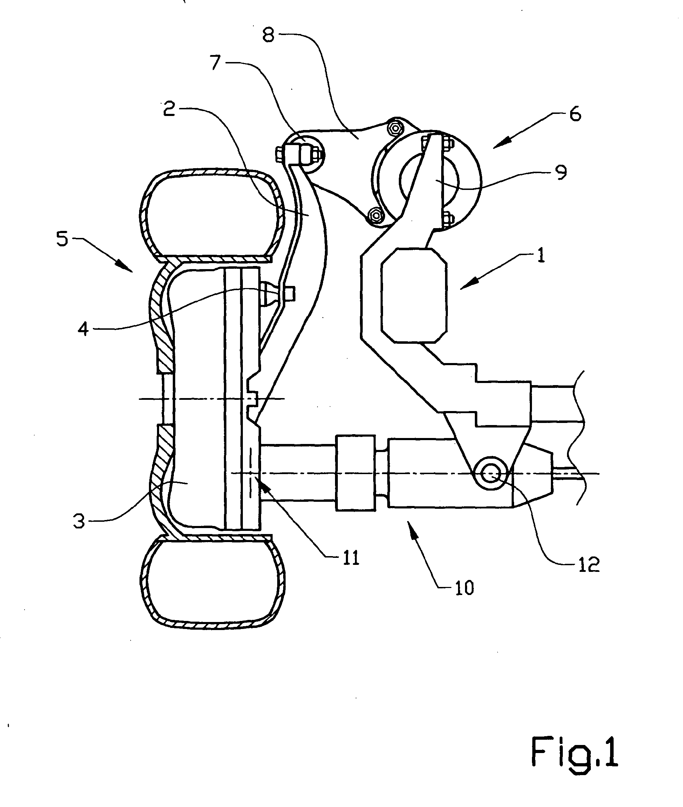

Figure 1 shows a suspension arrangement attached to a vehicle chassis 1. The arrangement includes an upper linkage arm 2 having an outer part attached to an upper part of a wheel hub 3 by means a first bolt 4 placed at a position coinciding with a central vertical axis through the wheel hub 3, and by at least one further bolt at its outermost end. A vehicle wheel 5 is attached to the hub 3 in a conventional manner. A inner end of the upper linkage arm 2 is attached to a torsion spring unit 6 by means of a pivoting joint 7, placed at an outer end of a lever arm 8 fixed to and extending radially from the torsion spring unit 6. For a steered wheel, the pivoting joint 7 is replaced by a ball joint, also termed a ball-and-socket joint. The torsion spring unit 6 is placed with its main axis substantially parallel to a longitudinal axis of the vehicle and is attached at both ends to a support 9 (only one shown) on the chassis 1. The suspension further includes a pair of identical lower linkage arms 10 (only one shown), each having an outer part attached to a lower part of a wheel hub 3 by means of pivoting joints 11 (only one shown) placed on either side of the central vertical axis through the wheel hub 3. The inner ends of the lower linkage arms 11 are connected to a pair of pivoting joints 12 (only one shown) on the chassis 1. As can be seen from Figure 1, the main axis of the torsion spring unit 6 is positioned above the upper pivoting point of the hub 3, that is, the outer pivoting joint 4 of the upper linkage arm 2.

The linkage arm or the end of the lever attached to the torsion spring unit can be attached to the wheel hub in different ways, depending on the desired function of the wheel. For non-steered wheels a simple pivoting joint will be sufficient, while steered wheels will require a ball joint or similar.

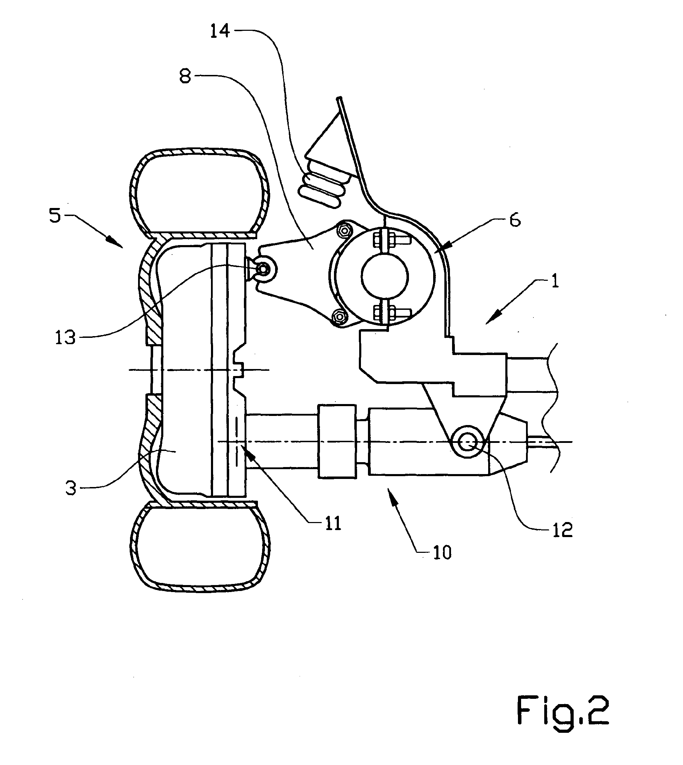

Figure 2 shows an alternative suspension arrangement, wherein the end of the lever arm 8 extending from the torsion spring unit 6 is directly attached to a ball joint 13 on the wheel hub 3. This arrangement is particularly suited for a steered wheel. As stated above, the ball joint 13 may be replaced by a pivoting joint for a non-steered wheel. The lower linkage arms 10 are arranged in the same way as described for Figure 1 above. As in the embodiment of Figure 1, the torsion spring unit 6 is attached at both ends to the chassis 1. In addition, the chassis 1 is provided with a resilient stop 14 above the lever arm 8, to limit the vertical deflection of said lever arm 8. Due to the chassis configuration this damper is only shown in Figure 2, although it will be included in all embodiments where it is possible for a part of the suspension to contact the chassis in an extreme end position. The resilient stop 14 is a standard rubber damper. As can be seen from Figure 2, the main axis of the torsion spring unit 6 is positioned substantially level with the upper pivoting point of the hub 3, that is, the outer pivoting joint 13 of the lever arm 8.

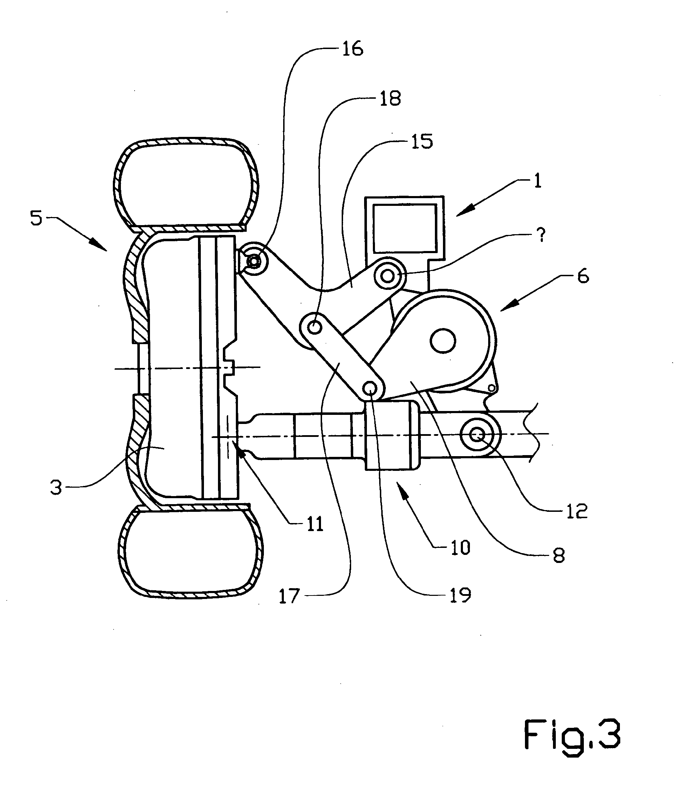

Figure 3 shows a further alternative suspension arrangement, wherein the outer end of a generally L-shaped linkage arm 15 is attached to a pivoting joint 16 on the wheel hub 3. For a steered wheel, the pivoting joint is replaced by a ball joint. The inner end of the linkage arm 15 is attached to the chassis 1 substantially level with the pivoting joint 16. An angled, lower section of the L-shaped linkage arm 15 is connected to the lever arm 8 of the torsion spring unit 6 via a second linkage arm 17. The second linkage arm 17 is provided with a first pivoting joint 18 on the lower section of the L-shaped linkage arm 15 and a second pivoting joint 19 at the end of the lever arm 8. The second linkage arm 17 is positioned so that a line through its pivoting joints 18, 19 will pass through or near the upper pivoting point of the hub 3, depending on the current load applied to the torsion spring unit 6. As can be seen from Figure 3, the main axis of the torsion spring unit 6 is positioned below the upper pivoting point of the hub 3, that is, the outer pivoting joint 13 of the upper linkage arm 8.

The examples shown in Figures 1-3 are provided with a pair of parallel lower linkage arms. These arms can be extended or retracted either in parallel or individually, to effect steering, camber/caster adjustment and other control functions. These features are not covered by the current application and will not be described in further detail.

The above arrangements, shown in Figures 1-3, show how the torsion spring unit can be positioned depending on the type of chassis and the space available for mounting the suspension. The suspension arrangement further comprises leaf springs which can be indirectly preloaded by the torsion spring unit.

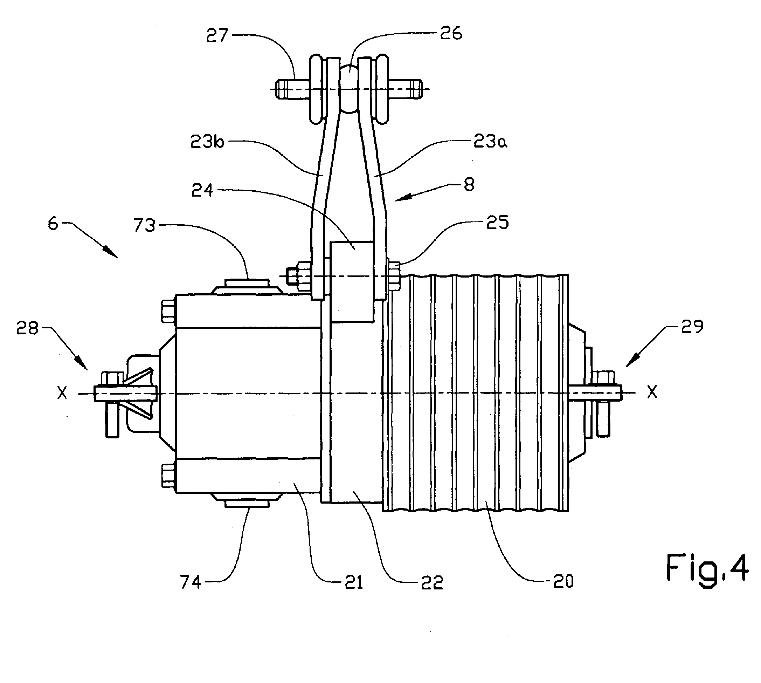

Figure 4 shows a plan view of a torsion spring unit 6 as shown in Figures 1-3. The unit comprises a torsion spring 20 and a rotation damper 21, connected by an attachment unit 22. The attachment unit 22 includes a planetary gear, where the radially extending lever arm 8 is mounted on a casing that in effect is an outer ring of said gear. The planetary gear will be described in detail below. The lever arm 8 includes a pair of identical sections 23a, 23b attached to a projection 24 on the attachment unit 22 by means of a nut-and bolt connection 25. This connection 25 is preferably mounted in a rubber bushing (not shown) in order to prevent the transmission of vibrations into the casing of the torsion spring unit and, in this case, outer ring of the gear unit. Longitudinal forces in the suspension, mainly occurring during braking or acceleration, are taken up by the lower linkage arms 10. However, due to a longitudinal elastic deflection of the wheel suspension, the arrangement must allow small movements between the outer end of the lever arm 8 and the torsion spring unit itself. This movement is usually in the range of 10-20 mm. The outer end of the lever arm 8 is provided with a ball joint 26 having an attachment bolt 27 extending substantially parallel with an axis X through the torsion spring unit 6. The ball joint 27 is arranged to be connected to either a linkage arm 2, 15 or a wheel hub 3, as described above. The respective ends of the torsion spring 20 and the rotation damper 21 are each provided with attachment points 29a, 29b and 28 respectively for fixing the torsion damper unit 6 to the chassis.

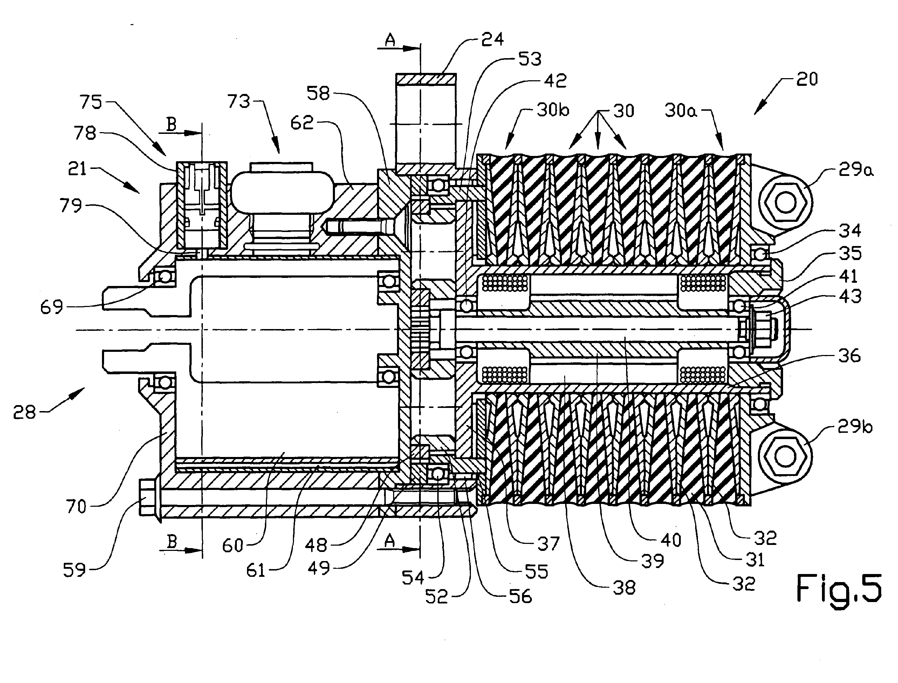

Figure 5 shows a longitudinal cross-section (X-X in Fig.4) of the torsion damper unit 6 as described in connection with Figure 4. The torsion spring 20 is built up from a number of identical resilient elements 30, each comprising an annular rubber segment 31 placed between a pair of identical and opposed steel discs 32. The rubber segments 31 and the steel discs 32 are preferably vulcanized together. In addition, the outer faces of the steel discs are provided with a ribbed pattern or with teeth to prevent relative rotation between adjacent elements 30 when stacked together and compressed as shown in Figure 5. The thickness of the rubber segments 31, the inner and outer diameter of the co-operating discs 32 and the number of elements is determined by the load to be taken up by the torsion spring. An outer element 30a of the stack of elements 30 is fixed in position by an annular end section 33 of the torsion spring 20, which end section 33 is attached to the chassis by means of the attachment points 29a, 29b. The annular end section 33 is provided with a bearing 34 at its inner diameter, which bearing 34 is held in place by an annular clamp 35. Said clamp 35 is attached by a threaded connection to a first end of a rotatable tubular sleeve 36 in sliding connection with the inner diameter of the resilient elements 30. The tubular sleeve 36 has an annular disc 37 at its opposite, second end, which annular disc 37 supports an inner element 30b of the stack of elements 30. The annular disc 37 is rotatable relative to the stack of elements 30 and is integrated with the attachment section 22 around its outer periphery.

The material use in the elements may of course be varied within the scope of the invention. The steel discs may be made from other metals, such as aluminium or magnesium, or from a plastics material, such as polyamide. Furthermore, the rubber segments may be replaced by any suitable natural or synthetic material having the required elastic properties.

The stack of elements 30 can be pre-loaded by means of an electric motor that is placed inside the tubular sleeve 36. The motor has a stator 38 fixed to the inner surface of the tubular sleeve 36, and a rotor 39 fixed to an axle 40. The axle 40 has its outer end journalled in a bearing 41 attached inside the annular clamp 35, and its inner end journalled in a bearing 42 attached inside the annular disc 37. The outer end of the axle 40 is held in place by a nut 43 acting against the bearing 41, while the inner end is positioned by an enlarged portion 44 near the inner end of the axle 40. At its innermost end, the axle 40 is provided with a toothed gear 45, which is part of a planetary gear to be described in detail below.

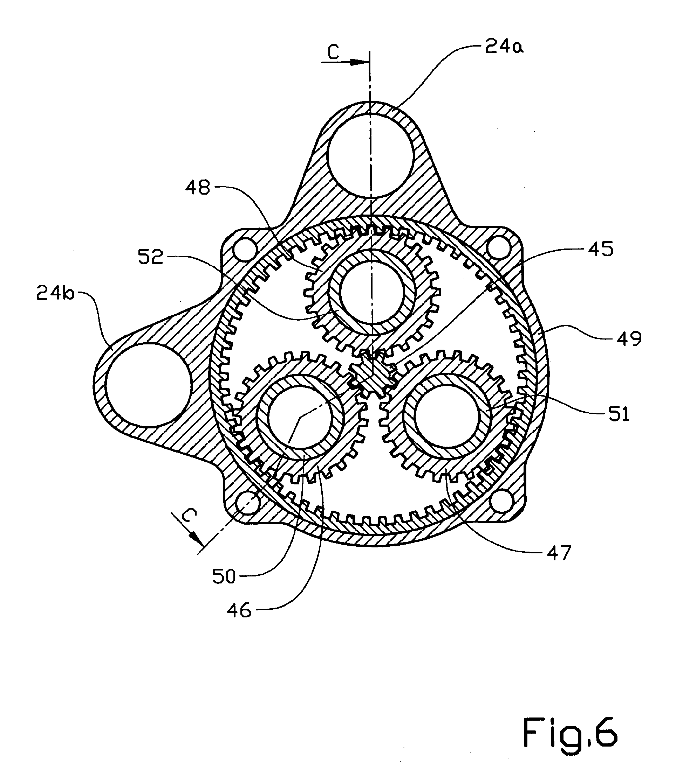

Figure 6 shows a cross-section (A-A in Fig.5) through the planetary gear contained within the attachment section 22. The figure also indicates the section C-C through the gear unit shown in Figure 5. The central sun wheel 45 meshes with three surrounding first annular gears 46, 47, 48, which in turn mesh with a first outer gear ring 49 attached to the attachment section 22. Said first annular gears 46, 47, 48 are each mounted on a second annular gear 50, 51, 52. This is achieved by providing the second annular gears 50, 51, 52 with cylindrical projections having outer diameters corresponding to the inner diameters of the first annular gears 46, 47, 48. In addition, the first annular gears 46, 47, 48 are fixed relative to the second annular gears 50, 51, 52. Finally, the second annular gears 50, 51, 52 mesh with a second outer gear ring 53 that is journalled in a bearing 54 relative to the attachment section 22 (see Fig. 5). The first outer gear ring 49 has a slightly larger mean diameter than the second outer gear ring 53. When the sun wheel 45 is rotated the arrangement causes a speed reduction, with a corresponding increase in torque to be transmitted to the outer gear rings 49 and 53. The split gear arrangement of the first and second annular gears and the outer gear rings causes a difference in the rate of rotation at the outer rings. As the first outer ring 49 is attached to the attachment section 22, the torque will be transferred to the second, journalled outer gear ring 53. The second outer gear ring 53 is provided with a number of projections 55 extending through a corresponding number of slots 56, shaped as circular arcs, in the annular disc 37. Said projections 55 engage with an annular end wall 57 in fixed contact with the inner element 30b of the stack of elements 30.

In operation, the electric motor 38,39 will be actuated and rotate the axle 40 in the desired direction. The rotation of the axle 40 is transmitted through the planetary gear, causing relative rotation of the outer gear rings 49 and 53. When the second outer gear ring 53 is rotated the projections 55 engages the innermost element 30b of the stack of elements 30, applying a pre-loading force to the torsion spring 20. According to a preferred embodiment, the second outer gear ring 53 can cause the inner element 30b to be rotated up to ±60° relative to the fixed outer element 30a.

The planetary gear may be substituted by a different type of reduction gear. One such gear comprises an eccentric disc driven by the motor, which eccentric disc is rotatable in a journal or sliding bearing of a gear wheel. The gear wheel is placed inside an outer gear ring, whereby the offset of the eccentric disc corresponds to the difference in radius between the gear wheel and the outer gear ring Rotation of the eccentric disc will cause a rotation of the gear wheel relative to the outer gear ring, resulting in a speed reduction.

According to a further alternative the electric motor and gear unit may be replaced by a hydraulic motor. The torque produced by a hydraulic motor is sufficient for pre-loading the torsion spring without the aid of a reduction gear.

According to one embodiment, the individual torsion springs are dimensioned to take up the weight of the entire vehicle. This requires a relatively large stack of elements and an electric motor large enough to control all the movements of the suspension.

According to a further embodiment, the weight of the vehicle in its unloaded state is taken up by leaf springs. This requires a relatively small stack of elements and a correspondingly smaller electric motor. As this arrangement will give a more compact unit, having a longer service life, it is also the preferred embodiment.

The leaf springs are dimensioned to give the vehicle a predetermined ride height above ground level. This height can be maintained for different loading conditions by pre-loading the torsion springs 20. Depending on the type of condition, the torsion springs may be pre-loaded in the same or different directions. This allows the entire vehicle, or a part thereof, to be lifted or pulled down relative to the normal loading leaf springs. In this way the leaf springs will always have the same compression, resulting in the same ride height of the vehicle. The position of zero applied force by the torsion spring is preferably selected to fit a common loading case, such as an empty vehicle or a vehicle with 2-3 passengers. This allows the torsion spring to work in both directions relative to its non-loaded, or zero load position.

The arrangement can also be controlled to give several different alternative suspension settings. The torsion spring can for instance be used for lifting the vehicle in an "off-road" setting, or for pulling the vehicle downwards in a "sport" or "racing" setting. These ride height adjustments are made relative to the normal loading leaf springs, as described above.

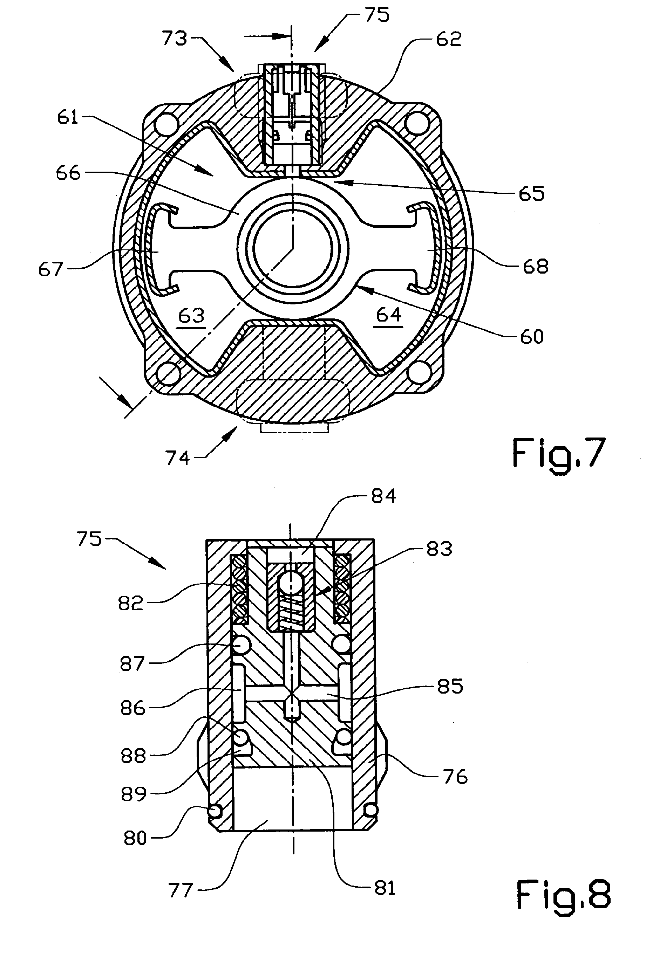

Figure 7 shows a cross-section (B-B in Fig.5) through the rotary damper and an associated re-fill valve. The figure also indicates the section D-D through the rotation damper shown in Figure 5. The rotary damper 21 is attached to the opposite side of the planetary gear. This damper is a preferably a electro-rheological vane damper. By regulating the current passing through the fluid it is possible to alter its viscosity, and hence the dampening properties of the rotary damper 21. The damper 21 comprises a vane 60 rotatable within a mainly cylindrical cavity 61 in a casing 62. The cavity 61 is provided with two chambers 63, 64 separated by a central, longitudinal constriction 65. The vane 60 has a mainly cylindrical section 66, whereby the longitudinal axes of the cavity 61 and the vane 60 coincides with the main axis of the torsion spring unit. The cylindrical section 66 is rotatable within the constriction 65 and effectively seals off fluid flow between the two chambers 63 and 64 along the entire length of the constriction 65. The vane is further provided with two wings 67, 68, each wing extending radially from the cylindrical section 66 in a respective chamber 63, 64. The wings 67, 68 extend to within a short distance from the inner wall of their respective chamber, and are provided with a peripherally widened section at their tips. The vane 60 extends through the entire length of the cavity 61 and its end surfaces are in sliding contact with the respective end surfaces of the cavity, as shown in Figure 5. This construction forces the fluid contained in the cavity 61 to flow through a pair of narrow gaps between the cavity walls and the tips of the vane, when the vane 60 is rotated. A bearing 69 is arranged in an opening of an outer end wall 70 of the rotation damper. The vane 60 has a cylindrical shank extending from one end and journalled in said bearing 69. This shank is the attachment point 28 of the rotation damper to the chassis, which in effect means that the vane 60 is held stationary as the casing 62 is rotated. At its opposite end, the vane 60 is provided with a further bearing 71 attached between an inner cylindrical surface of the vane 60 and an outer cylindrical surface of a projection 72 on the attachment section 22. To achieve this the vane 60 is made hollow, which has additional weight saving effects. The casing of the rotary damper 62 is attached to an end wall 58 common to the damper and the gearing unit by means of four bolts 59.

In order to alter the dampening characteristics of the rotation damper, a pair of electromagnetic devices 73, 74 are provided to change the viscosity of the fluid contained in the cavity 61. Said electromagnetic devices 73, 74 include a pair of iron cores with associated windings, indicated in Figures 5 and 7. The damper may also be of the electro-rheological type, which damper uses electric means to control the viscosity by acting on the fluid in the damper. Both electro-rheological and magneto-rheological dampers are well known *per se* and their function will not be described in greater detail.

The rotation damper is further provided with a re-fill valve 75, as shown in Figure 8. This figure is an enlarged view of the cross-section through the rotary damper (B-B in Fig.5). The valve 75 is arranged to keep the cavity pressurized and to replace liquid lost through leakage.

The re-fill valve 75 comprises a body 76 with a cylindrical cavity 77. The valve 75 is screwed into a cavity 78 in the damper casing 62, which cavity 78 has a fluid connection 79 with the internal cavity 61 of the damper. The body 76 is provided with an external seal 80, between its outer periphery and the cavity 78 in the casing 62. The cylindrical cavity 77 contains a sliding valve body 81 that is spring loaded to apply pressure to the fluid in the internal cavity 61. This is achieved by means of a helical spring 82 between the sliding valve body 81 and an end surface of the body 76. The outer end of the sliding valve body 81 is provided with a spring loaded check valve 83, which allows flow from an outer cavity 84 of the sliding valve body 81 to an internal conduit 85 terminating in a circumferential groove 86 in the sliding valve body 81. The groove valve body 81 is provided with an outer and an inner seal 87, 88 on either side of said groove. 86. The inner seal 88 is placed in a second groove 89 in the sliding valve body 81, which groove 89 has a short conical section having its smallest diameter at its inner end.

In operation, the spring loaded sliding valve body 81 acts on fluid contained in the inner end of the cylindrical cavity 77. This maintains a predetermined pressure in the internal cavity 61 of the damper. Should a minor leakage occur, then the cylindrical cavity 77 acts as a reservoir to re-fill the damper. The valve itself is re-filled by forcing fluid from the outer cavity 84 of the sliding valve body 81, through the check valve 83 and the internal conduit 85 into the circumferential groove 86 in the sliding valve body 81. When said groove 86 is pressurized, the inner seal 88 is forced into a larger section of the second groove 89. This allows the pressurized fluid to flow past the seal 88 into the inner part of the cylindrical cavity 77.

In operation, sensors (not shown) in the suspension provides data to a central processing unit (CPU) about movements of the position, steering angle and other data relating to the respective wheels. In response to the data and a possible selected program setting (comfort, sport, racing, etc.), the CPU will transmit control signals to the electric motor of the spring unit and the electromagnetic devices of the rotation damper.

## Claims

1. Method for dampening control in a vehicle suspension, wherein a suspension arrangement for each wheel includes at least two linkages (8, 10) connecting a wheel (5) to a vehicle chassis (1), and where a torsion spring unit (6) is part of one of said linkages, **characterized in that** the suspension further includes a leaf spring and that each torsion spring unit (6) is provided with an actuator for pre-stressing the torsion spring unit (6) and pre-loading the leaf spring, in order to adjust the vehicle to a desired level, and that the actuator adjusts the spring rate of the suspension relative to the pre-stressed position of the torsion spring unit (6) and a pre-loaded position of the leaf spring when the vehicle is in motion.

2. Method according to claim 1, **characterized in that** the actuator acts on the torsion spring unit (6) to dampen oscillations near a resonance frequency of the vehicle body.

3. Method according to claim 2, **characterized in that** the torsion spring unit (6) dampens vehicle body oscillations of a frequency up to 3 Hz.

4. Method according to claim 1, **characterized in that** the actuator acts on the torsion spring unit (6) to dampen oscillations near a resonance frequency of the vehicle wheel (5).

5. Method according to claim 4, **characterized in that** the torsion spring unit (6) dampens vehicle wheel oscillations of a frequency up to 15 Hz.

6. Method according to claim 1, **characterized in that** the suspension further includes a leaf spring and that the actuator integral with the torsion spring unit (6) adjusts the spring rate of the suspension in response to a sensed oscillating movement of the associated wheel (5).

7. Arrangement for dampening control in a vehicle suspension, wherein a suspension arrangement for each wheel (5) includes at least two linkages connecting a wheel (5) to a vehicle chassis (1), and where a torsion spring unit (6) is part of one of said linkages (8), **characterized in that** the suspension further comprises a leaf spring, and that the torsion spring unit (6) comprises an adjustable torsion spring (20), an actuator arranged act on the torsion spring and a rotation damper (21) interconnected with the torsion spring by an attachment section (22), wherein the rotation damper (21) and the torsion spring (20) are connected to the chassis (1) and the attachment section (22) is connected to the linkage (8), and where the actuator is arranged to pre-stress the torsion spring and preload the leaf spring to a predetermined position, and to dampen oscillations in said suspension relative to said predetermined position.

8. Arrangement according to claim 7, **characterized in that** the attachment section (22) interconnecting the rotation damper (21) and the torsion spring (20) is a gearing unit.

9. Arrangement according to claim 7, **characterized in that** the gearing unit is a planetary gear.

10. Arrangement according to claim 7, **characterized in that** the suspension further includes a leaf spring and that the torsion spring (20) is provided with an actuator (38, 39) for adjusting the spring rate.

11. Arrangement according to claim 10, **characterized in that** the electric motor (38, 39) is arranged for instantaneous adjustment of the spring rate, in order to dampen oscillating movement of a wheel (5).

12. Arrangement according to claim 11, **characterized in that** the torsion spring (20) is a rubber torsion spring.

13. Arrangement according to claim 12, **characterized in that** the electric motor (38, 39) is placed inside an annular rubber torsion spring (20).

14. Arrangement according to claim 12, **characterized in that** the electric motor (38, 39) is placed at an outer end of the torsion spring (20).

15. Arrangement according to claim 7, **characterized in that** the rotation damper (21) is a vane rotation damper.

16. Arrangement according to claim 15, **characterized in that** the rotation damper (21) is a electro-rheological damper.

17. Arrangement according to claim 15, **characterized in that** the rotation damper (21) is a magneto-rheological damper.

18. Arrangement according to claim 7, **characterized in that** the actuator is arranged to act on the torsion spring unit (6) to dampen low frequency oscillations.

19. Arrangement according to claim 18, **characterized in that** the torsion spring unit (6) is arranged to dampen oscillations near a resonance frequency of the vehicle body.

20. Arrangement according to claim 19, **characterized in that** the torsion spring unit (6) is arranged to dampen oscillations up to 2 Hz.

21. Arrangement according to claim 7, **characterized in that** the linkage (8) attached to the torsion spring unit (6) is an upper linkage arm.

## Patentansprüche

1. Verfahren zur Dämpfungssteuerung in einer Fahrzeugaufhängung, wobei eine Aufhängungsanordnung für jedes Rad mindestens zwei Lenker (8, 10) aufweist, die ein Rad (5) mit einem Fahrzeugfahrgestell (1) verbinden, und wobei eine Torsionsfedereinheit (6) Teil eines der Lenker ist, **dadurch gekennzeichnet, daß** die Aufhängung ferner eine Blattfeder aufweist und daß jede Torsionsfedereinheit (6) mit einem Aktuator zum Vorspannen der Torsionsfedereinheit (6) und Vorbelasten der Blattfeder versehen ist, um das Fahrzeug auf eine Sollhöhe einzustellen, und daß der Aktuator die Federrate der Aufhängung relativ zur vorgespannten Position der Torsionsfedereinheit (6) und einer vorbelasteten Position der Blattfeder einstellt, wenn das Fahrzeug in Bewegung ist.

2. Verfahren nach Anspruch 1, **dadurch gekennzeichnet, daß** der Aktuator auf die Torsionsfedereinheit (6) wirkt, um Schwingungen nahe einer Resonanzfrequenz der Fahrzeugkarosserie zu dämpfen.

3. Verfahren nach Anspruch 2, **dadurch gekennzeichnet, daß** die Torsionsfedereinheit (6) Fahrzeugkarosserieschwingungen mit einer Frequenz bis 3 Hz dämpft.

4. Verfahren nach Anspruch 1, **dadurch gekennzeichnet, daß** der Aktuator auf die Torsionsfedereinheit (6) wirkt, um Schwingungen nahe einer Resonanzfrequenz des Fahrzeugrads (5) zu dämpfen.

5. Verfahren nach Anspruch 4, **dadurch gekennzeichnet, daß** die Torsionsfedereinheit (6) Fahrzeugradschwingungen mit einer Frequenz bis 15 Hz dämpft.

6. Verfahren nach Anspruch 1, **dadurch gekennzeichnet, daß** die Aufhängung ferner eine Blattfeder aufweist und daß der in die Torsionsfedereinheit (6) integrierte Aktuator die Federrate der Aufhängung als Reaktion auf eine erfaßte Schwingungsbewegung des zugeordneten Rads (5) einstellt.

7. Anordnung zur Dämpfungssteuerung in einer Fahrzeugaufhängung, wobei eine Aufhängungsanordnung für jedes Rad (5) mindestens zwei Lenker aufweist, die ein Rad (5) mit einem Fahrzeugfahrgestell (1) verbinden, und wobei eine Torsionsfedereinheit (6) Teil eines der Lenker (8) ist, **dadurch gekennzeichnet, daß** die Aufhängung ferner eine Blattfeder aufweist und daß die Torsionsfedereinheit (6) aufweist: eine einstellbare Torsionsfeder (20), einen Aktuator, der so angeordnet ist, daß er auf die Torsionsfeder wirkt, und einen Drehungsdämpfer (21), der mit der Torsionsfeder durch ein Anbringungsteilstück (22) gegenseitig verbunden ist, wobei der Drehungsdämpfer (21) und die Torsionsfeder (20) mit dem Fahrgestell (1) verbunden sind und das Anbringungsteilstück (22) mit dem Lenker (8) verbunden ist und wobei der Aktuator so angeordnet ist, daß er die Torsionsfeder vorspannt und die Blattfeder in eine vorbestimmte Position vorbelastet sowie Schwingungen in der Aufhängung relativ zur vorbestimmten Position dämpft.

8. Anordnung nach Anspruch 7, **dadurch gekennzeichnet, daß** das Anbringungsteilstück (22), das den Drehungsdämpfer (21) und die Torsionsfeder (20) gegenseitig verbindet, eine Getriebeeinheit ist.

9. Anordnung nach Anspruch 7, **dadurch gekennzeichnet, daß** die Getriebeeinheit ein Planetengetriebe ist.

10. Anordnung nach Anspruch 7, **dadurch gekennzeichnet, daß** die Aufhängung ferner eine Blattfeder aufweist und daß die Torsionsfeder (20) mit einem Aktuator (38, 39) zum Einstellen der Federrate versehen ist.

11. Anordnung nach Anspruch 10, **dadurch gekennzeichnet, daß** der Elektromotor (38, 39) zur sofortigen Einstellung der Federrate angeordnet ist, um Schwingungsbewegung eines Rads (5) zu dämpfen.

12. Anordnung nach Anspruch 11, **dadurch gekennzeichnet, daß** die Torsionsfeder (20) eine Gummitorsionsfeder ist.

13. Anordnung nach Anspruch 12, **dadurch gekennzeichnet, daß** der Elektromotor (38, 39) innerhalb einer ringförmigen Gummitorsionsfeder (20) plaziert ist.

14. Anordnung nach Anspruch 12, **dadurch gekennzeichnet, daß** der Elektromotor (38, 39) an einem Außenende der Torsionsfeder (20) plaziert ist.

15. Anordnung nach Anspruch 7, **dadurch gekennzeichnet, daß** der Drehungsdämpfer (21) ein Flügeldrehungsdämpfer ist.

16. Anordnung nach Anspruch 15, **dadurch gekennzeichnet, daß** der Drehungsdämpfer (21) ein elektrorheologischer Dämpfer ist.

17. Anordnung nach Anspruch 15, **dadurch gekennzeichnet, daß** der Drehungsdämpfer (21) ein magnetorheologischer Dämpfer ist.

18. Anordnung nach Anspruch 7, **dadurch gekennzeichnet, daß** der Aktuator so angeordnet ist, daß er auf die Torsionsfedereinheit (6) wirkt, um niederfrequente Schwingungen zu dämpfen.

19. Anordnung nach Anspruch 18, **dadurch gekennzeichnet, daß** die Torsionsfedereinheit (6) so angeordnet ist, daß sie Schwingungen nahe einer Resonanzfrequenz der Fahrzeugkarosserie dämpft.

20. Anordnung nach Anspruch 19, **dadurch gekennzeichnet, daß** die Torsionsfedereinheit (6) so angeordnet ist, daß sie Schwingungen bis 2 Hz dämpft.

21. Anordnung nach Anspruch 7, **dadurch gekennzeichnet, daß** der an der Torsionsfedereinheit (6) angebrachte Lenker (8) ein oberer Lenkerarm ist.

## Revendications

1. Procédé de commande d'amortissement dans une suspension de véhicule, dans lequel un agencement de suspension pour chaque roue inclut au moins deux bielles (8, 10) reliant une roue (5) à un châssis de véhicule (1), et dans lequel une unité de ressort de torsion (6) fait partie de l'une desdites bielles, **caractérisé en ce que** la suspension comprend en outre un ressort lame et **en ce que** chaque unité de ressort de torsion (6) est pourvue d'un actionneur pour précontraindre l'unité de ressort de torsion (6) et précharger le ressort lame, afin de régler le véhicule à un niveau souhaité, et **en ce que** l'actionneur ajuste la constante de ressort de la suspension par rapport à la position précontrainte de l'unité de ressort de torsion (6) et une position préchargée du ressort lame quand le véhicule est en mouvement.

2. Procédé selon la revendication 1, **caractérisé en ce que** l'actionneur agit sur l'unité de ressort de torsion (6) pour amortir les oscillations près d'une fréquence de résonance de la carrosserie de véhicule.

3. Procédé selon la revendication 2, **caractérisé en ce que** l'unité de ressort de torsion (6) amortit les oscillations de la carrosserie de véhicule d'une fréquence jusqu'à 3 Hz.

4. Procédé selon la revendication 1, **caractérisé en ce que** l'actionneur agit sur l'unité de ressort de torsion (6) pour amortir des oscillations près d'une fréquence de résonance de la roue de véhicule (5).

5. Procédé selon la revendication 4, **caractérisé en ce que** l'unité de ressort de torsion (6) amortit les oscillations de roues de véhicule d'une fréquence jusqu'à 15 Hz.

6. Procédé selon la revendication 1, **caractérisé en ce que** la suspension comprend en outre un ressort lame et **en ce que** l'actionneur intégré avec l'unité de ressort de torsion (6) ajuste la constante de ressort de la suspension en réponse à un mouvement d'oscillation détecté de la roue (5) associée.

7. Agencement de commande d'amortissement dans une suspension de véhicule, dans lequel l'agencement de suspension pour chaque roue (5) inclut au moins deux bielles reliant une roue (5) à un châssis de véhicule (1), et où une unité de ressort de torsion (6) fait partie d'une desdites bielles (8), **caractérisé en ce que** la suspension comprend en outre un ressort lame, et **en ce que** l'unité de ressort de torsion (6) comprend un ressort de torsion réglable (20), un actionneur agencé agit sur le ressort de torsion et un amortisseur de rotation (21) interconnecté avec le ressort de torsion par une section de fixation (22), dans lequel l'amortisseur de rotation (21) et le ressort de torsion (20) sont connectés au châssis (1) et la section de fixation (22) est connectée à la bielle (8), et où l'actionneur est agencé pour précontraindre le ressort de torsion et précharger le ressort lame en une position prédéterminée, et pour amortir les oscillations dans ladite suspension par rapport à ladite position prédéterminée.

8. Agencement selon la revendication 7, **caractérisé en ce que** la section de fixation (22) reliant l'amortisseur de rotation (21) et le ressort de torsion (20) est une unité d'engrenage.

9. Agencement selon la revendication 7, **caractérisé en ce que** l'unité d'engrenage est un train épicycloïdal.

10. Agencement selon la revendication 7, **caractérisé en ce que** la suspension comprend en outre un ressort lame et **en ce que** le ressort de torsion (20) est pourvu d'un actionneur (38, 39) pour ajuster la constante du ressort.

11. Agencement selon la revendication 10, **caractérisé en ce que** le moteur électrique (38, 39) est agencé pour un réglage instantané de la constante du ressort, afin d'amortir le mouvement d'oscillation d'une roue (5).

12. Agencement selon la revendication 11, **caractérisé en ce que** le ressort de torsion (20) est un ressort de torsion en caoutchouc.

13. Agencement selon la revendication 12, **caractérisé en ce que** le moteur électrique (38, 39) est placé à l'intérieur d'un ressort de torsion (20) en caoutchouc annulaire.

14. Agencement selon la revendication 12, **caractérisé en ce que** le moteur électrique (38, 39) est placé à une extrémité extérieure du ressort de torsion (20).

15. Agencement selon la revendication 7, **caractérisé en ce que** l'amortisseur de rotation (21) est un amortisseur de rotation à ailettes.

16. Agencement selon la revendication 15, **caractérisé en ce que** l'amortisseur de rotation (21) est un amortisseur électro-rhéologique.

17. Agencement selon la revendication 15, **caractérisé en ce que** l'amortisseur de rotation (21) est un amortisseur magnéto-rhéologique.

18. Agencement selon la revendication 7, **caractérisé en ce que** l'actionneur est agencé pour agir sur l'unité de ressort de tension (6) pour amortir les oscillations basse fréquence.

19. Agencement selon la revendication 18, **caractérisé en ce que** l'unité de ressort de tension (6) est agencée pour amortir des oscillations proches d'une fréquence de résonance de la carrosserie de véhicule.

20. Agencement selon la revendication 19, **caractérisé en ce que** l'unité de ressort de tension (6) est agencée pour amortir des oscillations jusqu'à 2 Hz.

21. Agencement selon la revendication 7, **caractérisé en ce que** la bielle (8) fixée à l'unité de ressort de tension (6) est un bras de bielle supérieur.
